(19) Europäisches Patentamt
European Patent Office
Office européen des brevets

(11) **EP 1 055 700 B1**

(12) **EUROPEAN PATENT SPECIFICATION**

(45) Date of publication and mention
of the grant of the patent:
**17.01.2007  Bulletin 2007/03**

(51) Int Cl.:
*C08J 9/12* (2006.01)  *C08J 9/16* (2006.01)
*C08J 9/228* (2006.01)  *C08K 3/04* (2006.01)
*C08L 23/10* (2006.01)  *B29C 44/44* (2006.01)

(21) Application number: **99973046.8**

(22) Date of filing: **30.11.1999**

(86) International application number:
**PCT/JP1999/006673**

(87) International publication number:
**WO 2000/032681 (08.06.2000 Gazette 2000/23)**

(54) **EXPANSION-MOLDED PRODUCT OF ELECTRICALLY CONDUCTIVE POLYPROPYLENE-BASED RESIN**

EXPANDIERTES FORMPRODUKT AUS ELEKTRISCH LEITFÄHIGEM HARZ AUF BASIS VON POLYPROPYLEN

PRODUIT MOULE PAR EXPANSION EN RESINE ELECTRIQUEMENT CONDUCTRICE A BASE DE POLYPROPYLENE

(84) Designated Contracting States:
**BE DE FR**

(30) Priority:  **03.12.1998  JP  34435098**

(43) Date of publication of application:
**29.11.2000  Bulletin 2000/48**

(73) Proprietors:
• **KANEKA CORPORATION**
**Osaka-shi, Osaka 530-8288 (JP)**
• **KANEKA BELGIUM N.V.**
**2260 Westerlo-Oevel (BE)**

(72) Inventors:
• **OKIMURA, Yoshihiko**
**Settsu-shi, Osaka 566-0072 (JP)**

• **VAN RAVESTYN, Pierre**
**B-2260 Westerlo-Oevel (BE)**
• **SATO, Shunichi**
**B-2260 Westerlo-Oevel (BE)**
• **YAMAGUCHI, Minori**
**Akashi-shi, Hyogo 673-0876 (JP)**
• **SENDA, Kenichi**
**Hirakata-shi, Osaka 573-0084 (JP)**

(74) Representative: **Vossius & Partner**
**Siebertstrasse 4**
**81675 München (DE)**

(56) References cited:
**EP-A- 0 079 080**      **JP-A- 9 202 837**
**JP-A- 48 047 958**    **US-A- 4 519 963**
**US-A- 4 525 297**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an electrically conductive expansion molding product of a polypropylene resin and a process for preparing the same.

Pre-expanded particles of polyolefin resins have been widely used as raw materials for the production of various expansion-molded articles such as automobile core materials, packaging materials and cushioning materials. As one of uses of the expansion-molded articles prepared from the polyolefin resin pre-expanded particles is mentioned use as a packaging material for electronic parts (integrated circuits) and substrates thereof, which attends on development of electronic industry in recent years.

For improving the electric conductivity of such expansion-molded articles prepared from the polyolefin resin pre-expanded particles, there have been generally applied a method wherein resin pellets used as the raw material of the polyolefin resin pre-expanded particles are kneaded with an antistatic agent and a method wherein the polyolefin resin expansion-molded articles are coated with an antistatic agent. The degree of improvement in conductivity by the use of usual antistatic agents (surface active agents) is within the range of about $10^{10}$-$10^{12}$ $\Omega$ in terms of surface resistivity. However, the effect on the conductivity produced by the use of antistatic agent greatly depends on the environment and is remarkably decreased, for example, by use in low temperature and low humidity atmosphere or with the lapse of time. For example, the decrease of the effect with the lapse of time is caused by consumption of antistatic agent owing to the migration onto the surface of expansion-molded articles. In particular, in case of use as cushioning materials and packaging materials which are desired to be repeatedly used, permanent maintenance of the effect is demanded but has not been achieved. Also, the incorporation of usual antistatic agents has a problem that the compression strength of expansion-molded articles is easy to lower owing to the plasticization effect of antistatic agents.

For the purpose of eliminating the defects as mentioned above of conductive (antistatic) expansion-molded articles containing an antistatic agent, proposed are conductive polyethylene resin pre-expanded particles containing conductive carbon dispersed therein and conductive polypropylene resin pre-expanded particles containing conductive carbon dispersed therein (Japanese Patent Publication Kokai No. 3-2230 and No. 9-202837). It is described that these pre-expanded particles are prepared by expanding particles of a polypropylene resin or a polyethylene resin containing conductive carbon uniformly dispersed therein by a prescribed method. In practice, however, it is not easy to prepare pre-expanded particles containing conductive carbon uniformly dispersed therein. It is also difficult to stably obtain a good conductive surface (surface resistivity of about $10^8$-$10^4$ $\Omega$). Thus, there has been strongly demanded development of packaging materials which satisfy both the compression strength of molded articles and the conductivity not influenced by circumstances.

It is an object of the present invention to provide a conductive polypropylene resin expansion-molded article having an excellent electric conductivity and an excellent strength against compression (compression strength).

A further object of the present invention is to provide a process for easily and stably prepare conductive polypropylene resin expansion-molded articles having an excellent electric conductivity and an excellent compression strength.

The present inventors have found, as a result of making an intensive study in view of the actual circumstances as mentioned above, that conductive polypropylene resin expansion-molded articles having a good electric conductivity and a low surface resistivity and being excellent in compression strength are stably obtained when polypropylene resin pre-expanded particles containing a prescribed amount of a conductive carbon and satisfying the equation (2):

$$0.25 \leqq \alpha/(\beta+\alpha) \leqq 0.60 \qquad (2)$$

preferably the equation (3):

$$0.25 \leqq \alpha/(\beta+\alpha) \leqq 0.45 \qquad (3)$$

wherein $\beta$ is the heat of fusion [J/g] of an endothermic peak based on the crystalline state inherent to the base resin in a DSC curve obtained by a differential scanning calorimeter when elevating the temperature from 40°C to 220°C at a rate of 10°C/minute, and $\alpha$ is the heat of fusion [J/g] of an endothermic peak appearing on the higher temperature side than the aforementioned peak, are molded in a mold at a temperature between the peak temperature for the DSC low-temperature-side melting point of the pre-expanded particles and the endothermic local minimum point located between the low-temperature-side fusion peak and the high-temperature-side fusion peak.

Thus, the present invention provides a conductive expansion molding product of a polypropylene resin, said product containing a conductive carbon and having a density of 18 to 100 g/liter and a surface resistivity of less than $10^{13}$ Ω and satisfying the equation (1):

$$Y \geqq 0.10X - 1.0 \qquad (1)$$

wherein Y is the strength (kg/cm$^2$) at 50 % compression of the expansion molding product measured according to NDS-Z0504 (Japan Defense Agency, National Defense Standard), and X is the density (g/liter) of the molding product.

Further, the present invention provides a process for preparing conductive expansion molding products of polypropylene resins, characterized by filling in a mold polypropylene resin pre-expanded particles containing 5 to 20 % by weight of a conductive carbon and satisfying the equation (2):

$$0.25 \leqq \alpha/(\beta+\alpha) \leqq 0.60 \qquad (2)$$

wherein β is the heat of fusion [J/g] of a low-temperature-side fusion peak based on the crystalline state inherent to the base resin in a DSC curve obtained by a differential scanning calorimeter when elevating the temperature from 40˚C to 220˚C at a rate of 10˚C/minute, and α is the heat of fusion [J/g] of a high-temperature-side fusion peak appearing on the higher temperature side with respect to the low-temperature-side peak, and heating to mold the particles at a temperature which is not less than the low-temperature-side fusion peak temperature and which is not more than the boundary temperature between the two fusion peaks on low temperature side and high temperature side.

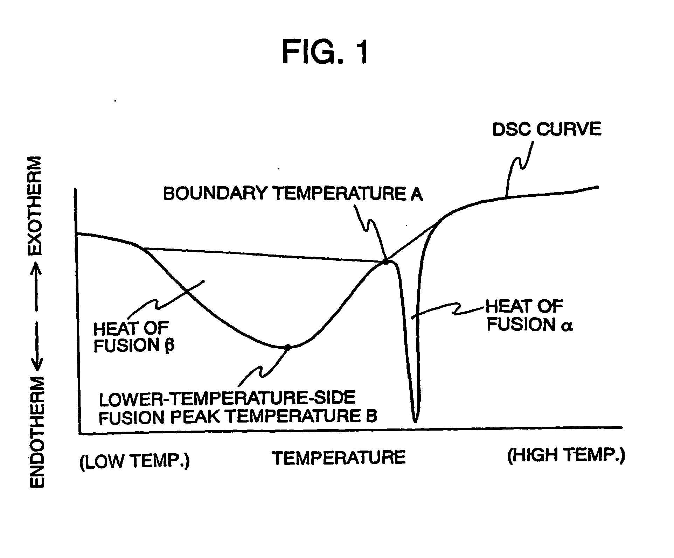

Fig. 1 is a view illustrating a method for determining the heat of fusion β [J/g] of an endothermic peak based on the crystalline state inherent to a base resin and the heat of fusion α [J/g] of an endothermic peak appearing on the higher temperature side than the aforementioned peak in a DSC curve obtained using polypropylene resin pre-expanded particles containing a conductive carbon by a differential scanning calorimeter when elevating the temperature from 40˚C to 220˚C at a rate of 10˚C/minute.

The conductive expansion molding product of a polypropylene resin according to the present invention contains a conductive carbon and has a density of 18 to 100 g/liter.

The polypropylene resins used as the base resin of the expansion molding product are not particularly limited, and any of those conventionally used for the production of polypropylene resin expansion-molded articles can be used. Polypropylene resins having an MI (melt index) of 0.5 to 50 g/10 minutes are preferred from the viewpoints of extrusion property, expandability and moldability.

Examples of such polypropylene resins are, for instance, propylene homopolymer, ethylene-propylene random copolymers, ethylene-propylene block copolymers, ethylene-propylene-butene random terpolymers, propylene-chlorinated vinyl copolymers, propylene-butene copolymers, propylene-maleic anhydride copolymers, and the like. Polypropylene resins prepared by a stereospecific polymerization method are preferred.

The conductive carbon is used for imparting an electric conductivity to the obtained polypropylene resin expansion molding products. Any of known conductive carbons can be used.

Conductive carbon having a surface area of 30 to 1,200 m2/g, a hydrogen content of 0.01 to 0.5 % by weight and an average particle size of 10 to 100 nm is preferred from the viewpoint of the conductivity. The conductive carbon may be an aggregate structure having a length of about 100 to about 1,000 nm or an agglomerate structure composed of aggregates having a size of at least 0.2 μm.

Examples of the conductive carbon are, for instance, a particulate carbon black such as acetylene black, furnace black or thermal black, Ketjen Black, and the like. Commercially available carbon black, e.g., CA4395 (Cabot Corp.) and Ketjen Black EC (Akzo Chemie Verkoopkantoor N.V.), can be used as the conductive carbon in the present invention. These may be used alone or in admixture thereof.

The content of the conductive carbon in the conductive carbon-containing polypropylene resin which constitutes the expansion molding products of the present invention is preferably from 5 to 20 % by weight, especially 8 to 16 % by weight. If the content is less than the above range, it tends to become difficult to impart a stable antistatic property to the expansion molding products. The use in an amount larger than the above range is disadvantageous from the viewpoint of cost and also tends to narrower the molding condition range.

The polypropylene resin containing a conductive carbon may contain arbitrary amounts of additives, as occasion demands, such as expansion nucleating agent, antistatic agent, antioxidant, light stabilizer, lubricant, pigment and flame retarder.

The density of the expansion molding products of the present invention is from 18 to 100 g/liter, preferably 20 to 60 g/liter. If the density is too small, the expansion molding products are poor in strength, and if the density is too large, the products are poor in cushioning property.

The expansion molding products as mentioned above of the present invention satisfy the equation (1):

$$Y \geqq 0.10X - 1.0 \qquad (1)$$

wherein Y is the strength (kg/ cm$^2$) at 50 % compression of an expansion molding product measured according to NDS-Z0504, and X is the density (g/liter) of the expansion molding product, and have a surface resistivity of less than $10^{13}$ Ω.

The strength Y at 50 % compression of the polypropylene resin expansion molding products which contain a conductive carbon and have a density of 18 to 100 g/liter, satisfies the equation (1). Therefore, the expansion molding products have a high strength under compression on such a high level as 50 % for their density despite that they are medium to low density expansion-molded articles such that the expansion ratio is about 9 to about 50. Also, the surface resistivity of the expansion molding products is as low as less than $10^{13}$ Ω, preferably not more than $10^{11}$ Ω. Accordingly, the expansion molding products can be suitably employed for the purposes such as packaging materials, particularly packaging materials for semiconductor products, precision mechanical equipment, computers and their peripheral devices and equipment.

The expansion-molded articles of the present invention can be prepared by preparing pre-expanded particles from a polypropylene resin containing 5 to 20 % by weight, preferably 8 to 16 % by weight, of a conductive carbon, and subjecting the pre-expanded particles to in-mold molding. In the present invention, as the pre-expanded particles are used conductive carbon-containing polypropylene resin pre-expanded particles (conductive polypropylene resin pre-expanded particles) which satisfy the equation (2):

$$0.25 \leqq \alpha/(\beta+\alpha) \leqq 0.60 \qquad (2)$$

preferably the equation (3) from the viewpoint of molding condition range:

$$0.25 \leqq \alpha/(\beta+\alpha) \leqq 0.45 \qquad (3)$$

wherein β is the heat of fusion [J/g] of an endothermic peak based on the crystalline state inherent to the base resin in a DSC curve obtained by a differential scanning calorimeter when elevating the temperature from 40˚C to 220˚C at a rate of 10˚C/minute, and α is the heat of fusion [J/g] of an endothermic peak appearing on the higher temperature side than the aforementioned peak.

The conductive polypropylene resin pre-expanded particles have a conductive carbon content of 5 to 20 % by weight, preferably 8 to 16 % by weight. The pre-expanded particles are prepared from polypropylene resin particles containing a conductive carbon. The resin particles are prepared by pre-kneading a polypropylene resin as a base resin with a conductive carbon and optionally additives by means of a mixer, a blender or the like to uniformly disperse the conductive carbon into the resin, and pelletizing the resulting mixture by means of an extruder or the like, or by using as a master batch a commercially available compound wherein a conductive carbon is incorporated into a polypropylene resin, kneading the master batch with a polypropylene resin to adjust the carbon concentration to a desired value, and pelletizing the resulting mixture. In this case, it is preferable to set the extrusion temperature conditions (barrel and die setting temperatures) to higher values than usual extrusion conditions for polypropylene resins. From the viewpoints of achieving good dispersion of the conductive carbon and maintaining its surface state without destroying, it is also preferable to set the extrusion velocity slightly lower and to set the number of revolutions of screw slightly lower, thereby preventing the extrusion resin pressure from becoming too high.

Production of conductive polypropylene resin pre-expanded particles can be conducted using the thus obtained conductive carbon-containing polypropylene resin particles, for example, by a method as mentioned below.

That is to say, the pre-expanded particles can be obtained by a method which comprises dispersing the above-mentioned resin particles and a blowing agent into a dispersion medium in a closed pressure vessel, heating to a temperature higher than the softening point of the resin particles and pressurizing, thereby impregnating the resin particles with the blowing agent, and opening one end of the vessel to release the expandable resin particles impregnated with the blowing agent together with the dispersion medium into an atmosphere of lower pressure than the inner pressure of the vessel, for example, into the atmosphere, thereby expanding the resin particles.

As the dispersion medium to disperse the resin particles can be employed solvents which do not dissolve the resin particles, e.g., water, alcohols such as methanol and ethanol, glycols such as ethylene glycol, and glycerol compounds. Usually water is employed.

A volatile blowing agent or an inorganic gas is preferably employed as the blowing agent to expand the resin particles. Examples of the volatile blowing agent are an aliphatic hydrocarbon such as propane, butane or hexane; an alicyclic hydrocarbon such as cyclobutane or cyclohexane; a halogenated hydrocarbon such as trichlorofluoromethane, dichlorodifluoromethane, dichlorotetrafluoromethane, methyl chloride, ethyl chloride or methylene chloride; and the like. Examples of the inorganic gas are carbon dioxide, air, nitrogen, helium, argon, and the like. These blowing agents may be used alone or in admixture thereof. Also, the volatile blowing agent and the inorganic gas may be used in combination.

The amount of the blowing agent is preferably from 5 to 30 parts by weight per 100 parts by weight of the resin particles when a volatile blowing agent is employed.

Upon dispersing the resin particles into a dispersion medium and heating, an agent to prevent the resin particles from melt-adhering to each other may be added to the dispersion medium. As the melt-adhesion inhibitor, there can be employed both inorganic and organic inhibitors so long as they do not dissolve in the dispersion medium. In general, inorganic melt-adhesion inhibitors are employed. As the inorganic melt-adhesion inhibitor are preferred powders of calcium tertiary phosphate, kaolin, mica, aluminum oxide, titanium oxide, aluminum hydroxide and the like.

In case of adding the melt-adhesion inhibitor, it is preferable to use it in combination with a so-called anionic, cationic or non-ionic surfactant as a dispersing aid.

The amount of the melt-adhesion inhibitor is preferably from about 0.01 to about 5 parts by weight per 100 parts by weight of the resin particles. The amount of the dispersing aid is preferably from about 0.001 to about 1 part by weight per 100 parts by weight of the resin particles.

As mentioned above, after impregnating resin particles containing a conductive carbon with a blowing agent in a closed vessel, the resin particles and the dispersion medium are released into an atmosphere of lower pressure than the inner pressure of the vessel, usually under an atmospheric pressure, to expand the resin particles by opening one end of the vessel, thus the pre-expanded particles can be obtained. It is preferable that the inner pressure of the vessel at the time of the impregnation with a blowing agent is at least 5 kgf/cm$^2$, preferably at least 10 kgf/cm$^2$, and the inner temperature of the vessel is from "melting point of a resin - 10˚C" to "melting point of a resin + 15˚C". In order to obtain molded articles having a good compression strength, it is necessary that the resin of the cell membrane of the pre-expanded particles is in a desirable crystalline state. Expansion-molded articles having a high compression strength are obtained when the resin of the cell membrane is in such a crystalline state that, in a DSC curve obtained by differential scanning calorimetry of the pre-expanded particles, a peak showing the presence of residual crystals is present on a higher temperature side than a peak based on a semi-molten state of the base resin, and the heat β of the peak on the lower temperature side and the heat of fusion α of the peak on the higher temperature side satisfy the above-mentioned equation (2), preferably the above-mentioned equation (3), when measured under the above-mentioned conditions. The pre-expanded particles having such a crystalline state are obtained by regulating the temperature in the vessel, the releasing velocity, the temperature of the lower pressure atmosphere and the like.

With reference to Fig. 1, how to determine the heats of fusion α and β of the endothermic peaks is explained below.

In Fig. 1, boundary temperature A is a point at which the slope of the tangent line is zero. This point is obtained and the tangent lines are drawn from this point toward the DSC curve on the higher temperature side and the DSC curve on the lower temperature side. The areas of portions enclosed by the DSC curve and each of the tangent lines are the heat of fusion α and the heat of fusion β, respectively.

The production of expansion-molded articles from the thus obtained conductive polypropylene resin pre-expanded particles is carried out according to a conventional in-mold expansion molding method for polypropylene resin pre-expanded particles wherein the pre-expanded particles are filled in a mold and heated with steam or the like to fuse them together. In order to obtain expansion-molded articles having a good conductivity and a surface resistivity of at most 10$^8$ Ω, it is preferable to carry out the in-mold molding by using a molding pressure slightly higher than the molding pressure for usual polypropylene resin pre-expanded particles and sufficiently heating the conductive polypropylene resin pre-expanded particles, to thereby produce conductive polypropylene resin expansion-molded articles having a thick skin layer and having a good surface property. The molding is carried out at a temperature (for example, 140 to 153˚C, preferably 147 to 153˚C) which is not less than the temperature of the fusion peak located on the lower temperature side and which is not more than the temperature of the boundary between the two fusion peaks on the lower temperature side and the higher temperature side. Thus, expansion-molded articles having good surface resistivity and compression strength are obtained.

The present invention is more specifically explained by means of examples, in which all parts and % are by weight unless otherwise noted. It is to be understood that the present invention is not limited to these examples.

PREPARATION EXAMPLES 1 TO 7 AND COMPARATIVE PREPARATION EXAMPLES 1 TO 4

(Preparation of pre-expanded particles)

An ethylene-propylene random copolymer (ethylene content 2 %, melting point 146˚C, hereinafter referred to as "PP resin (1)") and a conductive carbon (CA4395 made by Cabot Corp.) were mixed in proportions shown in Table 1. To the resulting mixture were added and mixed 0.01 part (100 ppm) of a cell size regulator (talc made by Hayashi Kasei Kabushiki Kaisha) per100 parts of the mixture, a light stabilizer and antioxidants. The mixture was kneaded and extruded by an extruder at a die temperature of 200 to 240˚C to give resin particles having a weight of about 1.8 mg/particle.

To 100 parts of the obtained resin particles were added 300 parts of water, 1 part of a dispersing agent (calcium tertiary phosphate), 0.02 part of a surfactant (LATEMUL PS made by Kao Corporation and a blowing agent (isobutane). In a closed pressure vessel, heating and regulation of the amount of blowing agent to be added were conducted with stirring the mixture to reach predetermined expansion temperature and pressure conditions (145˚, 20 kgf/cm$^2$) over about 30 minutes. Further, the mixture was maintained at that temperature for about 15 minutes with stirring.

A valve provided at a lower part of the pressure vessel was opened to release the mixture in the vessel into atmospheric pressure, followed by washing with water, cooling and drying, to give conductive polypropylene resin pre-expanded particles.

During the release, the pressure in the vessel was maintained by continuously feeding a nitrogen gas or a volatile blowing agent such as isobutane from a upper part of the vessel.

The expansion ratio and DSC peak ratio [$\alpha/(\beta+\alpha)$] (%) of the obtained pre-expanded particles were measured. The results are shown in Table 1.

Table 1

| | Main components (part) | | Expansion ratio (times) | $\alpha/(\beta+\alpha)$ (%) | Lower-temperature-side fusion peak temperature (˚C) | Boundary temperature (˚C) |
| --- | --- | --- | --- | --- | --- | --- |
| | PP resin (1) | Conductive carbon | | | | |
| Pre. Ex. 1 | 85 | 15 | 20 | 25 | 140 | 154 |
| Pre. Ex. 2 | 85 | 15 | 28 | 30 | 140 | 154 |
| Pre. Ex. 3 | 80 | 20 | 15 | 28 | 140 | 154 |
| Pre. Ex. 4 | 80 | 20 | 20 | 32 | 140 | 153 |
| Pre. Ex. 5 | 95 | 5 | 28 | 30 | 140 | 154 |
| Pre. Ex. 6 | 95 | 5 | 8 | 26 | 140 | 154 |
| Pre. Ex. 7 | 85 | 15 | 20 | 40 | 139 | 153 |
| Com. Pre. Ex. 1 | 75 | 25 | 15 | 44 | 140 | 153 |
| Com. Pre. Ex. 2 | 95 | 5 | 20 | 24 | 141 | 154 |
| Com. Pre. Ex. 3 | 80 | 20 | 25 | 62 | 140 | 153 |
| Com. Pre. Ex. 4 | 97 | 3 | 20 | 33 | 140 | 155 |

EXAMPLES 1 TO 7 AND COMPARATIVE EXAMPLES 1 TO 4

(Preparation of conductive polypropylene resin expansion-molded articles)

A closed pressure vessel was charged with each of the conductive polypropylene resin pre-expanded particles obtained in Preparation Examples 1 to 7 and Preparation Comparative Examples 1 to 4, and the particles were retained for about 8 hours at a temperature of about 60˚C and under a pressure of about 5 kgf/cm$^2$ to impregnate the conductive polypropylene resin pre-expanded particles with air, thereby imparting an inner pressure to the particles. The inner pressure of the conductive polypropylene resin pre-expanded particles imparted with an inner pressure is shown in Tables 2 and 3.

After the above treatment, the inner pressure-imparted conductive polypropylene resin pre-expanded particles were filled in a mold having a size of 320 × 320 × 60 (mm), and molded by heating with steam shown in Tables 2 and 3 (steam of 2.0 to 4.5 kgf/cm$^2$). After drying the obtained molded articles for 8 hours in a dryer kept at 80˚C, the melt adhesion, surface property, compression strength and conductivity of the molded articles were measured by the following methods. The results are shown in Tables 2 and 3.

(Melt adhesion)

One end of the obtained molded article was fixed, and the molded article was split by applying a pressure to the free end portion. The broken surface was observed and the evaluation was made based on the interface breaking percentage according to the following criteria.

◎: 20 % or less
○: more than 20 % to not more than 40 %
Δ: more than 40 % to not more than 60 %
× : more than 60 %

(Surface property)

The surface of the obtained molded article was visually observed and evaluated according to the following criteria:

◎: There is no irregularity caused by particles in the surface and the surface smoothness is very good.
○: Irregularity caused by particles in the surface is a little and the surface smoothness is good.
Δ: Irregularity caused by particles in the surface is slightly many and the surface smoothness is inferior.
× : Irregularity caused by particles in the surface is many and the surface smoothness is bad.

(Strength at 50 % compression)

The strength at 50 % compression was measured according to NDS-Z0504. If the equation (1): $Y \geqq 0.01X - 1$ wherein Y is the strength obtained (kg/cm$^2$) and X is the density of the molded article (g/liter) is satisfied, the product is judged passing the test, and if the equation (1) is not satisfied, the product is judged failure.

(Surface resistivity)

After allowing the obtained molded article to stand at 23˚C and a relative humidity of 55 % for 24 hours, the surface resistivity thereof was measured.

**Table 2**

| | Pre-expanded particles used | Inner pressure of particles (kgf/cm$^2$) | Molding steam pressure (kgf/cm$^2$) (temperature ˚C) | Melt adhesion | Surface property | Strength at 50% compression | Surface resistivity (Ω/□) (10Exx=10$^{xx}$) |
|---|---|---|---|---|---|---|---|
| Ex. 1 | Pre. Ex. 1 | 0.75 | 2.7 (140.1) | ○ | Δ | pass | 10E12 |
| Ex.2 | Pre. Ex. 1 | 0.75 | 2.8 (141.1) | ○ | ○ | pass | 10E12 |
| Ex.3 | Pre. Ex. 1 | 0.75 | 3.0 (142.9) | ◎ | ◎ | pass | 10E11 |
| Ex. 4 | Pre. Ex. 1 | 0.75 | 3.5 (147.2) | ◎ | ◎ | pass | 10E8 |
| Ex. 5 | Pre. Ex. 1 | 0.75 | 4.0 (151.1) | ◎ | ◎ | pass | 10E7 |
| Ex. 6 | Pre. Ex. 1 | 0.75 | 4.2 (152.6) | ◎ | ◎ | pass | 10E6 |
| Com.Ex.1 | Pre. Ex. 1 | 0.75 | 2.0 (132.9) | × | × | failure | 10E13 ≦ |
| Com.Ex.2 | Pre. Ex. 1 | 6.75 | 4.5 (154.7) | ◎ | × | failure | 10E6 |

Table 3

| | Pre-expanded particles used | Inner pressure of particles (kgf/cm$^2$) | Molding steam pressure (kgf/cm$^2$) (temperature °C) | Melt adhesion | Surface property | Strength at 50 % compression | Surface resistivity (Ω/□) (10Exx=10$^{xx}$) |
|---|---|---|---|---|---|---|---|
| Ex. 7 | Pre. Ex. 2 | 0.81 | 2.7 (140.1) | ○ | Δ | pass | 10E11 |
| Ex. 8 | Pre. Ex. 2 | 0.81 | 4.0 (151.1) | ○ | ○ | pass | 10E7 |
| Ex. 9 | Pre. Ex. 3 | 0.81 | 3.0 (142.9) | ◎ | ◎ | pass | 10E9 |
| Ex.10 | Pre. Ex. 4 | 0.81 | 3.1 (143.8) | ◎ | ◎ | pass | 10E8 |
| Ex. 11 | Pre. Ex. 5 | 0.82 | 3.0 (142.9) | ◎ | ◎ | pass | 10E12 |
| Ex. 12 | Pre. Ex. 6 | 0.83 | 3.1 (143.8) | ◎ | ◎ | pass | 1012 |
| Ex. 13 | Pre. Ex. 7 | 0.80 | 3.0 (142.9) | ◎ | ◎ | pass | 10E6 |
| Com.Ex.3 | Com. Pre. Ex. 1 | 0.80 | 3.1 (143.8) | × | × | failure | 10E6 ≧ |
| Com.Ex.4 | Com. Pre. Ex. 2 | 0.81 | 3.0 (142.9) | ◎ | × | failure | 10E12 |
| Com.Ex.5 | Com. Pre. Ex. 3 | 0.80 | 3.0 (142.9) | × | × | failure | 10E6 ≧ |
| Com.Ex.6 | Com. Pre. Ex. 4 | 0.83 | 3.0 (142.9) | ◎ | ○ | pass | 10E13 ≦ |

INDUSTRIAL APPLICABILITY

The conductive polypropylene resin expansion-molded articles of the present invention have an excellent conductivity and the compression strength thereof is large even if they have a high expansion ratio. Therefore, they are particularly useful as a packaging material for electric and electronic products. Also, they can be easily and stably prepared.

**Claims**

1. A conductive expansion molding product of a polypropylene resin obtainable by heating polypropylene resin pre-expanded particles in a mold to fuse together, said product containing a conductive carbon and having a density of 18 to 100 g/liter and a surface resistivity of less than $10^{13}$ Ω and satisfying the equation (1):

$$Y \geqq 0.10X - 1.0 \qquad (1)$$

wherein Y is the strength (kg/cm$^2$) at 50 % compression of said expansion molding product measured according to NDS-Z0504, and X is the density (g/liter) of said expansion molding product.

2. The expansion molding product of Claim 1, which is molded from polypropylene resin pre-expanded particles containing 5 to 20 % by weight of a conductive carbon and satisfying the equation (2):

$$0.25 \leqq \alpha/(\beta+\alpha) \leqq 0.60 \qquad (2)$$

wherein β is the heat of fusion [J/g] of an endothermic peak based on the crystalline state inherent to the base resin in a DSC curve obtained by a differential scanning calorimeter when elevating the temperature from 40°C to 220°C at a rate of 10°C/minute, and α is the heat of fusion [J/g] of an endothermic peak appearing on the higher temperature side with respect to the aforementioned peak.

3. A process for preparing conductive expansion molding products of polypropylene resins, **characterized by** filling in a mold polypropylene resin pre-expanded particles containing 5 to 20 % by weight of a conductive carbon and satisfying the equation (2):

$$0.25 \leqq \alpha/(\beta+\alpha) \leqq 0.60 \qquad (2)$$

wherein $\beta$ is the heat of fusion [J/g] of a lower-temperature-side fusion peak based on the crystalline state inherent to the base resin in a DSC curve obtained by a differential scanning calorimeter when elevating the temperature from 40°C to 220°C at a rate of 10°C/minute, and a is the heat of fusion [J/g] of a higher-temperature-side fusion peak appearing on the higher temperature side with respect to said lower-temperature-side peak, and heating to mold said particles at a temperature which is not less than the lower-temperature-side fusion peak temperature and which is not more than the boundary temperature between said two fusion peaks on lower temperature side and higher temperature side.

**Patentansprüche**

1. Leitfähiges expandiertes Formprodukt aus einem Polypropylenharz, erhältlich durch Erwärmen und Verschmelzen von vorexpandierten Polypropylenharzteilchen in einer Form, wobei das Produkt einen leitfähigen Kohlenstoff enthält und eine Dichte von 18 bis 100 g/l und einen Flächenwiderstand von weniger als $10^{13}\,\Omega$ aufweist und die Gleichung (1)

$$Y \geq 0{,}10X - 1{,}0 \qquad (1)$$

erfüllt,
wobei Y die Festigkeit (kg/cm$^2$) bei 50 % Kompression des expandierten Formprodukts, gemessen nach NDS-Z0504, und X die Dichte (g/l) des expandierten Formprodukts ist.

2. Expandiertes Formprodukt nach Anspruch 1, welches durch vorexpandierte Polypropylenharzteilchen geformt wurde, die 5 bis 20 Gew.-% eines leitfähigen Kohlenstoffs enthalten und die Gleichung (2)

$$0{,}25 \leq \alpha/(\beta+\alpha) \leq 0{,}60 \qquad (2)$$

erfüllen,
wobei $\beta$ die Schmelzwärme [J/g] eines endothermen Peaks, bezogen auf den dem Basisharz inhärenten kristallinen Zustand; in einer durch ein Differentialscanning-Kalorimeter erhaltenen DSC-Kurve ist, wenn die Temperatur von 40°C auf 220°C mit einer Geschwindigkeit von 10°C/Minute erhöht wird, und $\alpha$ die Schmelzwärme [J/g] eines endothermen Peaks ist, der, bezogen auf den vorstehend genannten Peak auf der Hochtemperaturseite liegt.

3. Verfahren zum Herstellen von leitfähigen, expandierten Formprodukten von Polypropylenharzen, **gekennzeichnet durch** das Füllen von vorexpandierten Polypropylenharzteilchen in eine Form, die 5 bis 20 Gew-% eines leitfähigen Kohlenstoffs enthalten und die Gleichung (2)

$$0{,}25 \leq \alpha/(\beta+\alpha) \leq 0{,}60 \qquad (2)$$

erfüllen,

wobei β die Schmelzwärme [J/g] eines Schmelzpeaks der Niedertemperaturseite, bezogen auf den dem Basisharz inhärenten kristallinen Zustand, in einer **durch** ein Differentialscanning-Kalorimeter erhaltenen DSC-Kurve ist, wenn die Temperatur von 40˚C auf 220˚C mit einer Geschwindikeit von 10˚C/Minute erhöht wird, und α die Schmelzwärme [J/g] eines Schmelzpeaks der Hochtemperaturseite ist, der, bezogen auf den Peak der Niedertemperaturseite, auf der Hochtemperaturseite liegt, und **durch** Erwärmen und Verformen der Teilchen bei einer Temperatur, die nicht geringer als die Temperatur des Schmelzpeaks der Niedertemperaturseite und nicht höher als die Grenztemperatur zwischen den beiden Schmelzpeaks der Niedertemperaturseite und der Hochtemperaturseite ist.

## Revendications

1. Produit conducteur, obtenu par expansion moulage d'une résine de polypropylène, qui peut être obtenu en chauffant des particules pré-expansées de résine de polypropylène dans un moule pour se souder entre elles, ledit produit contenant un carbone conducteur et ayant une densité de 18 à 100 g/litre et une résistivité superficielle inférieure à $10^{13}$ Ω et satisfaisant l'équation (1) :

$$Y \geq 0,10 \ X - 1,0 \qquad (1)$$

dans laquelle Y est la résistance (kg/cm$^2$), à 50 % de compression, dudit produit obtenu par expansion moulage, mesurée selon NDS-Z0504, et X est la densité (g/l) dudit produit obtenu par expansion moulage.

2. Produit de moulage par expansion selon la revendication 1, moulé à partir de particules pré-expansées de résine de polypropylène contenant 5 à 20 % en poids d'un carbone conducteur et satisfaisant l'équation (2) :

$$0,25 \ \leq \ \alpha/(\beta \ + \ \alpha) \ \leq \ 0,60 \qquad (2)$$

dans laquelle β est la chaleur de fusion [J/g] d'un pic endothermique, basé sur l'état cristallin propre à la résine de base, sur une courbe de DSC obtenue avec un calorimètre à balayage différentiel, quand on élève la température de 40˚C à 220˚C, à une vitesse de 10˚C/minute, et α est la chaleur de fusion [J/g] d'un pic endothermique apparaissant du côté température supérieure en ce qui concerne le pic mentionné ci-dessus.

3. Procédé de préparation de produits conducteurs, obtenus par expansion moulage de résines de polypropylène, **caractérisé par** les étapes consistant à charger dans un moule des particules pré-expansées de résine de polypropylène contenant 5 à 20 % en poids d'un carbone conducteur et satisfaisant l'équation (2) :

$$0,25 \ \leq \ \alpha/(\beta \ + \ \alpha) \ \leq \ 0,60 \qquad (2)$$

dans laquelle β est la chaleur de fusion [J/g] d'un pic de fusion côté température inférieure, basé sur l'état cristallin propre à la résine de base, sur une courbe de DSC obtenue avec un calorimètre à balayage différentiel, quand on élève la température de 40˚C à 220˚C à une vitesse de 10˚C/minute, et α est la chaleur de fusion [J/g] d'un pic de fusion côté température supérieure apparaissant du côté température supérieure en ce qui concerne ledit pic côté température inférieure, et à chauffer pour mouler lesdites particules à une températuer qui n'est pas inférieure à la température du pic de fusion côté température inférieure et qui n'est pas supérieure à la température limite entre lesdits deux pics de fusion du côté température inférieure et du côté température supérieure.

# FIG. 1